# EUROPEAN PATENT APPLICATION

(11) **EP 2 315 169 A1**
(43) Date of publication of application: **27.04.2011**
(21) Application number: 10162470.8
(22) Date of filing: 10.05.2010
(51) Int. Cl.: G06Q 10/00

(54) **System and method of modifying menu data for self-service terminals**

(30) Priority: 30.09.2009 US 247116 P; 18.12.2009 US 641660
(71) Applicant: NCR Corporation, Duluth, GA 30096 (US)
(72) Inventor: Salmen, Larry, Fort Collins, CO 80525 (US); Morgan, Kip, Fort Collins, CO 80525 (US); Knight, Paul, Loveland, CO 80538 (US); Fisher, Andrew, Peterborough, Cambridgeshire PE1 4EJ (GB)
(74) Representative: MacLeod, Roderick William

(57) **Abstract**

A system (10) and method of modifying menu data (22). The system (10) includes a computer (12) for receiving menu data from a host computer (16), for modifying the menu data (22) to exclude items unavailable for sale at a location, and for making modified menu data (24) available for use by self-service computers (14) at the location.

## Description

Self-service computer systems have replaced assisted-service computer systems in many business environments today. For example, self-service computer systems may be found in banking, retail, hospitality, travel, entertainment, medical, and other environments.

In some environments, self-service computers display menus containing choices for user selection. For example, quick service restaurants may have self-service computers that allow customers to select food items from a menu and pay for those food items.

Menu creation may be centrally managed. For example, in quick service restaurant companies that manage thousands of restaurants, central menu management teams manage and control menus for individual restaurants. The central menu management teams generate a small number of menus and send them to the individual restaurants.

In most instances, menus contain all menu items for all restaurants. Since individual restaurants sell some but not all items in the menus, assisted service restaurant personnel are taught to only accept orders for items sold in their restaurants. Thus, trained personnel avoid ordering of items not sold in their restaurants. This practice reduces the time and cost for central menu management teams by allowing them to avoid creating custom menus for each restaurant.

However, this practice of distributing menus containing all items sold by all restaurants is suited for an assisted-service environment with clerk controlled point of sale terminals, not a self-service environment with self-service kiosks. Customers cannot be taught to avoid ordering unavailable or inactive food items.

Therefore, it would be desirable to mitigate or overcome this problem.

According to a first aspect of the invention there is provided a transaction system comprising: an in-store computer for receiving menu data from a host computer and for modifying the menu data to exclude items unavailable for sale at a location; and a self-service computer at the location for displaying transaction screens including modified menu data from the in-store computer.

The transaction screens may include available items and unavailable items.

The transaction screens may display the unavailable items differently than the available items.

First content associated with the unavailable items may be graphically different than second content associated with the unavailable items.

The first content may include only a name of the unavailable item.

The first content may include an image of the unavailable item which is grayed out.

The first content may include a banner across an image of the unavailable item marking the unavailable item as unavailable.

According to a second aspect of the invention there is provided a method of modifying menu data comprising: receiving the menu data from a host computer by another computer; modifying the menu data to exclude items unavailable for sale at a location by the other computer; and making modified menu data available for use by self-service computers at the location by the other computer.

The method may further comprise: storing details of modifications made to the menu data by the other computer; comparing subsequent menu data from the host computer to the details to identify any of the subsequent menu data that are equal to previously received menu data by the other computer; and ignoring the subsequent menu data that are equal to the previously received menu data by the other computer.

The modifying step optionally comprises: removing an image of a permanently unavailable item.

The modifying step optionally comprises: replacing a first image of a temporarily unavailable item with a second image which is less distinctive than the first image.

The modifying step optionally comprises: replacing a first image of a temporarily unavailable item with a second image which includes a banner marking the temporarily unavailable item as temporarily unavailable.

The making step optionally comprises: storing the modified menu data locally; receiving requests for the modified menu data from the self-service computers; and serving the modified menu data to the self-service computers in response to the requests.

The making step comprises: sending the modified menu data to the self-service computers for storage by the self-service computers following modification of the menu data.

According to a third aspect of the invention there is provided a menu modification system comprising: a computer for receiving menu data from a host computer, for modifying the menu data to exclude items unavailable for sale at a location, and for making modified menu data available for use by self-service computers at the location.

The computer optionally comprises an in-store server coupled to the self-service computers via a network.

The computer optionally comprises an attendant computer coupled to the self-service computers via a network.

The unavailable items optionally comprise temporarily unavailable items and/or permanently unavailable items.

According to a fourth aspect there is provided a system including a computer for receiving menu data from a host computer, for modifying the menu data to exclude items unavailable for sale at a location, and for making modified menu data available for use by self-service computers at the location.

These aspects may provide a system and method of modifying menu data for self-service computers.

These and other aspects of the present invention will become apparent from the following specific description, given by way of example, with reference to the accompanying drawings.

Fig. 1 illustrates a block diagram of a first example system including menu data.

Fig. 2 illustrates a block diagram of a second example system including menu data.

Fig. 3 illustrates an example screen showing menu modification.

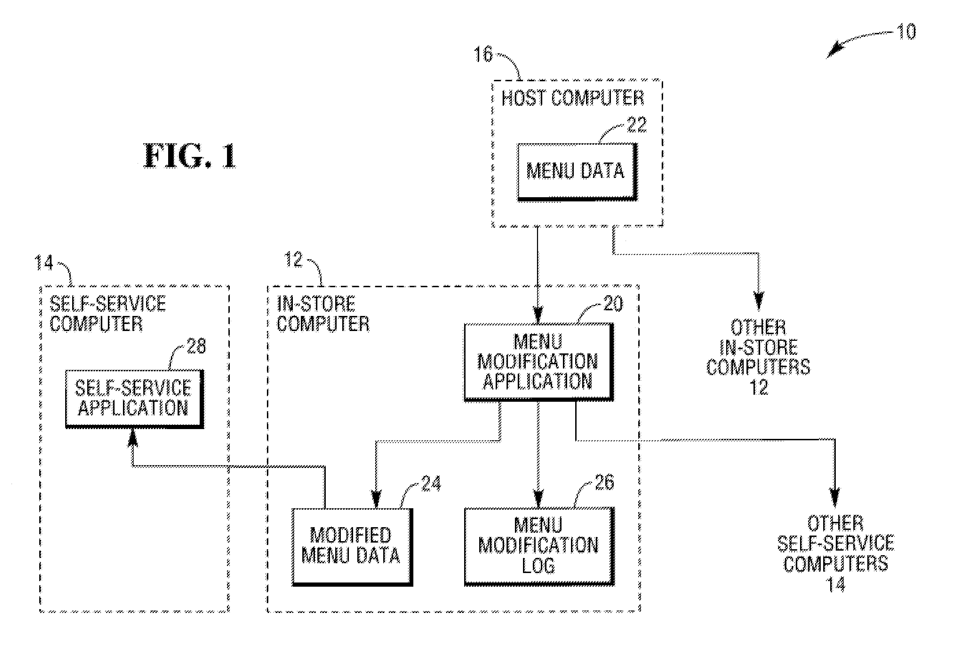

Referring now to Fig. 1, a first example system 10 includes one or more in-store computers 12, one or more self-service computers 14, and a host computer 16.

In-store computer 12, self-service computer 14, and host computer 16 may be coupled together by a network. The network may be a proprietary network or a global communication network, such as the Internet.

The venue for in-store computer 12 and self-service computer 14 may be any venue suited to displaying a menu. One example venue is a quick service restaurant, for example, a "fast food" restaurant in which the menu displays food items for selection by customers. However, other types of venues are also envisioned where self-service users make choices via menus.

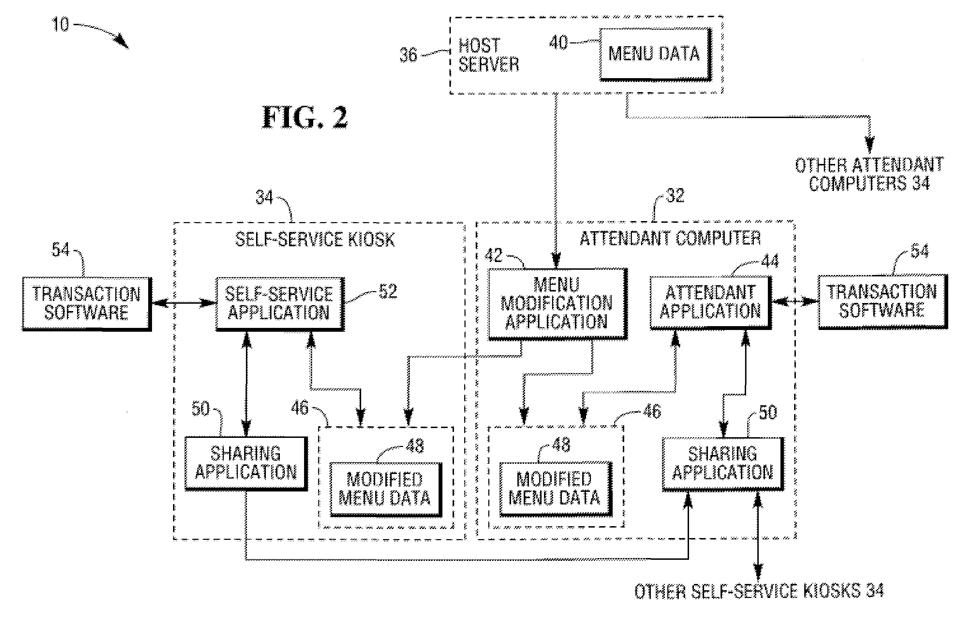

Host computer 36 (Fig 2) may be located and operated in a headquarters or other operational office where centralized menu decisions are made.

In-store computer 12 and self-service computer 14 each include a processor, memory, program and data storage, a display, and one or more user input devices. The display and user input device may be combined as a touch screen.

In-store computer 12 and self-service computer 14 may each execute an operating system such as a Microsoft operating system, which can display screen information within one or more windows.

In-store computer 12 and self-service computer 14 additionally include components and peripherals necessary to accomplish the purpose for the environment in which they are located. For example, self-service computer 14 may additionally include, but not be limited to, any of the following: one or more payment peripherals and a receipt printer. Example payment peripherals include a card reader, a currency and/or coin accepter, and a currency and/or coin dispenser.

In-store computer 12 executes menu modification application 20, which receives menu data 22 from host computer 16. Menu data 22 may contain selections that do not apply to a particular store location. Menu modification application 20 modifies menu data 22 to produce modified menu data 24. Example modifications to menu data 22 include classifying menu items in menu data 22 as available for sale, temporarily unavailable for sale, or permanently inactive or unavailable for sale in response to user selection. Other types of modifications are also envisioned.

Menu modification application 20 may include roles and permissions that control modification of menu data 22. For example, permission may be required for a user to change an item from currently unavailable to available, or vice versa.

Menu modification application 20 may facilitate reclassifying menu items in modified menu data 22. For example, menu modification application 20 may record a previously unavailable item as now available for sale in response to user selection.

Menu modification application 20 may also recognize rules or instructions from host computer 16 in menu data 22. For example, the operational office may include instructions specifying that temporarily unavailable items be automatically made available again at the start of the next business day.

Menu modification application 20 may additionally store modifications to menu data 22 in modification log 26 and automatically compare subsequent menu data 22 to the information in menu modification log 26 to avoid subsequent menu data 22 overwriting earlier modified menu data 24. Menu modification application 20 thus ignores portions of subsequent menu data 22 if they correspond to modifications that have previously been made.

Self-service computer 14 executes self-service application 28, which displays modified menu data 24, including, for example, available items and temporarily unavailable items, and not permanently unavailable or inactive items. Self-service application 28 may function to complete a transaction.

In-store computer 12 may include an in-store server computer which stores modified menu data 24. Self-service computers 14 may be client computers which access modified menu data 24 from in-store computer 12 when needed.

Alternatively, self-service computers 14 may store copies of modified menu data 24. In-store computer 12 may send modified menu data 24 to each of self-service computers 14 following changes.

Referring now to Fig. 2, a second example system 10 in a quick service or fast food venue includes one or more attendant computers 32, one or more self-service kiosks 34, and a host computer 36.

Attendant computer 32 and self-service kiosk 34 may be located in close proximity to another so that an attendant may see and verbally interact with a customer.

Alternatively, attendant computer 32 and self-service kiosk 34 and may be located separately from each other. For example, self-service kiosk 34 may be located in a drive-through lane or in a play area.

In this example, attendant computer 32 executes menu modification application 42, which receives menu data 40 from host computer 36 and modifies menu data 40 to produce modified menu data 48. In alternative embodiments, menu modification application 42 may reside on a different or separate in-store computer.

Modifications to menu data 40 include classifying food items in menu data 40 as available for sale, temporarily unavailable for sale, or permanently inactive or unavailable for sale in response to user selection. In response, self-service application 52 and attendant application 44 display available food items as being available for sale, display temporarily unavailable food items as being temporarily unavailable for sale, and do not display permanently unavailable or inactive food items. Menu modification application 42 stores modified menu data 48 as part of self-service application data 46.

Attendant computer 32 is coupled to one or more self-service kiosks 34. Attendant computer 32 allows an attendant to interact with a customer at any of self-service kiosks 34 during a transaction. Attendant computer 32 executes attendant application 44, which access local or remote copies of self-service application data 46 associated with each of the self-service kiosks 34 to obtain data defining a screen currently displayed by one or more self-service kiosks 34, including modified menu data 48. Modified menu data 48 may include images of food items available for selection by a customer, and food selections already made by the customer.

Attendant computer 14 further executes sharing application 50, which receives the identity of the screen currently displayed by self-service application 52, and any selections made by a customer on that screen.

Attendant application 44 stores the screen identity information and the selections in the locally stored copy of self-service application data 46. Thus, sharing application 44 ensures that locally stored self-service application data 46 on attendant station 32 are synchronized with self-service application data 46 stored on self-service kiosk 34. An attendant at attendant computer 32 sees the same display information that is displayed by self-service kiosk 34. The attendant can make selections on behalf of the customer and the customer can watch the attendant selections as they are performed at self-service kiosk 34.

Self-service kiosk 34 allows a self-service customer to perform a transaction with or without assistance from an attendant at attendant computer 32. Self-service kiosk 34 executes self-service application 52 for this purpose. Self-service application 52 displays screens from self-service application data 46, including modified menu data 48. Modified image data 48 may include images of food items available for selection by a customer, and food selections already made by the customer.

Self-service kiosk 34 additionally executes sharing application 50, which sends information to attendant computer 32, including the identity of a currently displayed screen and any selections made by a customer on that screen. Sharing application 50 further receives selections made by an attendant at attendant computer 32.

Self-service application 52 stores the selections as updates to self-service application data 46. Thus, sharing application 50 ensures that locally stored self-service application data 46 on self-service kiosk 34 is synchronized with self-service application data 46 stored by attendant computer 32. A customer at self-service kiosk 34 sees the same display information that is displayed by attendant computer 32. The customer can make selections and the attendant can watch the customer selections in real time as they are performed at attendant computer 32.

Attendant application 44 and self-service application 52 may optionally hand off payment processing to transaction software 54.

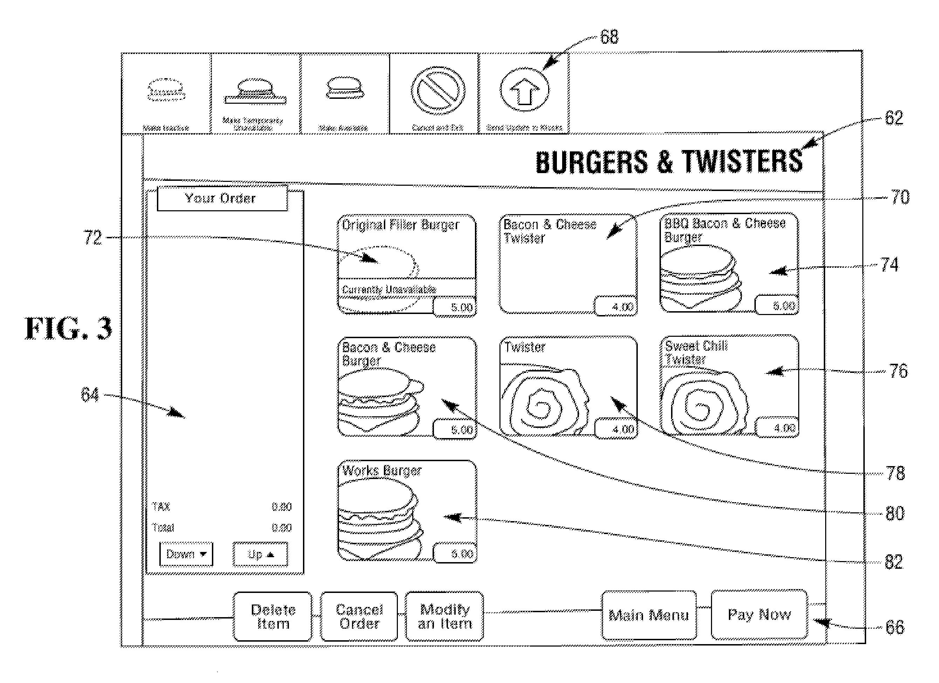

Turning now to Fig. 3, an example screen 60 illustrating menu modification is shown.

Example screen 60 includes a transaction screen of attendant application 44. The transaction screen includes a menu section 62 containing a menu of items in menu data 40 and their images, a receipt section 64 which during a transaction contains a running tally of menu item selections, and a control section 66 containing navigation choices for transactions, including buttons that allow a user to return to a main menu, delete an item from receipt section 64, cancel the order, modify an item, return to a main menu, or complete payment.

As illustrated, menu modification application 42 runs on top of attendant application 44 as an extra control 68. Alternatively, menu modification application 42 may run separately from attendant application 44.

Menu section 62 includes a menu of items or groups of items sent by host computer 36 within menu data 40. In the illustrated example, the menu of items includes images of the items which are also sent by host computer 36.

Menu section 62 may be divided into a plurality of screens, and may include a hierarchy of items identified in groups.

Menu items within menu section 62 may include advertisements for food items or "display only" items, orderable food items, condiments, and toppings or other extras.

Menu control 68 includes buttons that allow a user to modify menu data 40. The buttons include a make inactive button, a make temporarily unavailable button, and a make available button. A user selects a menu item or a group of menu items before selecting one of the control buttons.

The make inactive button marks a selected menu item or group of menu items as permanently unavailable or inactive. In response, menu modification application 42 changes the way an inactive item appears in menu section 62. For example, menu modification application 42 may cause an image of a food item, such as food item 70, to no longer be displayed, leaving only a text label identifying the item.

The make temporarily unavailable button marks a selected menu item or group of menu items as temporarily unavailable. In response, menu modification application 42 changes the way a temporarily unavailable item appears in menu section 62. For example, menu modification application 42 may cause a banner with text "currently unavailable" to be displayed over an image of a food item, such as food item 72. Menu modification application 42 may also change an image of food item 72 to appear unavailable for selection, such as by making the image appear less distinctive than that of an available item or "grayed out".

The make available button marks a selected menu item or group of menu items as being available. This tool is used to change an inactive or temporarily unavailable item to available. In response, menu modification application 42 changes the way an inactive item or a temporarily unavailable item appears in menu section 62. For example, menu modification application 42 may restore an image of a previously inactive item and remove a banner from an image of a temporarily unavailable item.

Food items not marked as inactive or temporarily unavailable, such as food items 74-82, are available.

Changes to menu items are saved in modified menu data 48. Changes to a menu item in one menu screen are applied to all menu screens.

If self-service kiosks 34 store modified menu data 48 locally as in Fig. 2, menu control 68 may further include an update button identified as "send update to kiosks". Selection of the update button sends modified menu data 48 including recent modifications to menu section 62 to self-service kiosks 34. Self-service kiosks 34 display the same modified menu data 48 in corresponding menu sections on their displays.

Advantageously, self-service application 52 uses modified menu data 48 instantly, without any reboot, reconfiguration, or restart of self-service application 52. Thus, customers see no interruption in their use of self-service kiosk 34. For example, self-service application 52 would recognize in real time a change to a menu item that makes the menu item temporarily unavailable

Menu control 68 also includes a "cancel and exit" button to undo recent changes and exit menu modification application 42.

Although particular reference has been made to certain embodiments, variations and modifications are also envisioned within the spirit and scope of the following claims.

## Claims

1. A transaction system (10) comprising:
an in-store computer (12) for receiving menu data (22) from a host computer (16) and for modifying the menu data (22) to exclude items unavailable for sale at a location; and
a self-service computer (14) at the location for displaying transaction screens (60) including modified menu data (24) from the in-store computer (12).

2. The system of claim 1, wherein the transaction screens (60) include available items and unavailable items.

3. The system of 2, wherein the transaction screens (60) display the unavailable items differently than the available items so that first content associated with the unavailable items is graphically different than second content associated with the unavailable items.

4. The system of claim 3, wherein the first content includes an image of the unavailable item which is grayed out.

5. A method of modifying menu data comprising:
receiving the menu data from a host computer by another computer;
modifying the menu data to exclude items unavailable for sale at a location by the other computer; and
making modified menu data available for use by self-service computers at the location by the other computer.

6. The method of claim 5, further comprising:
storing details of modifications made to the menu data by the other computer;
comparing subsequent menu data from the host computer to the details to identify any of the subsequent menu data that are equal to previously received menu data by the other computer; and
ignoring the subsequent menu data that are equal to the previously received menu data by the other computer.

7. The method of claim 5, wherein the modifying step comprises:
removing an image of a permanently unavailable item.

8. The method of claim 5, wherein the modifying step comprises:
replacing a first image of a temporarily unavailable item with a second image which is less distinctive than the first image.

9. The method of claim 5, wherein the modifying step comprises:
replacing a first image of a temporarily unavailable item with a second image which includes a banner marking the temporarily unavailable item as temporarily unavailable.

10. The method of claim 5, wherein the making step comprises:
storing the modified menu data locally;
receiving requests for the modified menu data from the self-service computers; and
serving the modified menu data to the self-service computers in response to the requests.

11. The method of claim 5, wherein the making step comprises:
sending the modified menu data to the self-service computers for storage by the self-service computers following modification of the menu data.
